# DEMANDE DE BREVET EUROPEEN

(11) **EP 1 443 603 A1**
(43) Date de publication de la demande: **04.08.2004**
(21) Numéro de dépôt: 04290093.6
(22) Date de dépôt: 14.01.2004
(51) Int. Cl.: H01R 9/24

(54) **Organe d'agencement de moyens de connexion, dispositif de montage de moyens de connexion et baie porteuse**

(30) Priorité: 15.01.2003 FR 0300386
(71) Demandeur: INFRA + Société anonyme dite:, F-94240 L'Hay les Roses (FR)
(72) Inventeur: Masse, Dominique, 91360 Epinay sur Orge (FR)
(74) Mandataire: CAPRI

(57) **Abrégé**

Organe d'agencement (1) de moyens de connexion (5, 5'), tels que des prises courant faible (5) ou optique (5'), ledit organe comprenant plusieurs logements d'accueil au niveau desquels des moyens de connexion respectifs (5, 5') sont reçus, caractérisé en ce que lesdits logements sont disposés verticalement de sorte que les moyens de connexion (5, 5') sont disposés les uns au-dessus des autres.

## Description

La présente invention concerne un organe d'agencement de moyens de connexion tels que par exemple des prises courant faible ou optique ainsi qu'un dispositif de montage de moyens de connexion utilisant un ou plusieurs organe(s) d'agencement. L'invention concerne également une baie porteuse destinée à recevoir un ou plusieurs dispositif(s) de montage comportant chacun un ou plusieurs organe(s) d'agencement. On utilise ce genre de matériel dans le domaine de la connectique pour réaliser des répartiteurs ou des sous répartiteurs. En général, les baies se présentent sous la forme de deux rails de support verticaux sur lesquels on vient monter et fixer des dispositifs de montage qui se présentent souvent sous la forme de bandeaux ou de platines sur lesquels les moyens de connexion tels que les prises sont disposées de manière agencée. L'écartement des deux rails constituant la baie porteuse est fixé de manière pratiquement standard à 19 pouces. Avec une telle baie porteuse 19 pouces, les dispositifs de montage de moyens de connexion peuvent comprendre 24 prises disposées côte à côte. De même, la hauteur de chaque prise est pratiquement standardisée à une valeur de 44,45 mm. Ainsi, la baie porteuse permet de réaliser à l'aide des dispositifs de montage une sorte de tableau vertical dans lequel les diverses prises sont disposées côte à côte par rangées horizontales.

Dans une forme de réalisation très classique, les dispositifs de montage peuvent se présenter sous la forme de platines de montage ou de bandeaux comprenant une plaque frontale verticale découpée de fenêtres destinées à recevoir directement ou indirectement des connecteurs électriques ou optiques basse tension tels que des prises.

On connaît d'autre part le document FR-2 823 602 qui décrit un ensemble de montage de connecteurs électriques comprenant une platine de montage longitudinale, au moins un support de connecteurs et des connecteurs montés sur les supports de connecteurs respectifs. La platine de montage de cet ensemble se présente sous la forme d'une plaque définissant des moyens d'accrochage qui s'étendent de manière répétée sur une seule ligne de sorte que les supports de connecteurs sont fixés à la platine en faisant saillie verticalement à partir de la platine vers le haut ou vers le bas. Bien entendu, la platine de montage est destinée à être fixée horizontalement à chacune de ses extrémités à un rail de support formant la baie porteuse. De cette manière, on peut disposer côte à côte toute une série de prises les unes à côté des autres dans un plan horizontal. Chaque platine peut donc recevoir 24 prises dans le standard 19 pouces. En disposant plusieurs platines les unes à côté des autres, on obtient ainsi un tableau constitué de rangées de prises fixées sur des platines respectives. Toutefois, étant donné que les platines sont disposées les unes au-dessus des autres dans la baie porteuse, les prises sont également disposées les unes au-dessus des autres verticalement en formant des colonnes. Toutefois, chaque prise d'une colonne de prises est solidaire d'une platine de montage respective.

Etant donné que le standard 19 pouces est le plus largement utilisé pour la réalisation de tels répartiteurs, les dispositifs de montage, par exemple les platines de montage, sont adaptés à ce standard 19 pouces et comprennent 24 emplacements pour des prises. Il n'est de ce fait pas possible de moduler le nombre d'emplacements de prises dans un dispositif de montage du type platine. Il est certes possible de ne monter que 10 ou 12 prises sur une platine ou un bandeau 19 pouces de 24 emplacements. Toutefois, on perd alors un nombre considérable d'emplacements inoccupés et de ce fait inexploités.

La présente invention a pour but de remédier à cet inconvénient dans l'agencement des moyens de connexion montés dans un répartiteur ou plus généralement dans un dispositif de montage à fixer sur une structure porteuse.

Pour ce faire, la présente invention propose un organe d'agencement de moyens de connexion, tels que des prises courant faible ou optique, ledit organe comprenant plusieurs logements d'accueil au niveau desquels des moyens de connexion respectifs sont reçus, caractérisé en ce que lesdits logements sont disposés verticalement de sorte que les moyens de connexion sont disposés les uns au-dessus des autres. Ainsi, les moyens de connexion ne sont plus agencés horizontalement par rangées, comme c'est le cas avec les dispositifs de montage classiques de l'art antérieur du type platine ou bandeau, mais au contraire les moyens de connexion sont disposés verticalement dans un organe d'agencement spécifique qui peut se présenter ou être considéré comme une cassette définissant plusieurs logements d'accueil disposés les uns au-dessus des autres à la manière d'une colonne. Avantageusement, chaque logement comprend des moyens de fixation destinés à coopérer directement ou indirectement avec des moyens de connexion respectifs pour une fixation amovible des moyens de connexion dans le logement. Avantageusement, l'organe d'agencement comprend une face avant, les logements étant ouverts sur la face avant, les moyens de connexion étant insérables dans leurs logements respectifs depuis la face avant.

Avantageusement, chaque logement est pourvu de moyens de fixation destinés à coopérer avec des organes de support sur lesquels les moyens de connexion sont montés. De préférence, les moyens de fixation sont situés au niveau d'un bord inférieur de chaque logement.

Selon un autre aspect de l'invention, l'organe d'agencement comprend des moyens de verrouillage sur une structure de support. L'organe d'agencement présente de préférence une configuration allongée verticale définissant un bord inférieur longitudinal et un bord supérieur longitudinal, les moyens de verrouillage étant situés au niveau d'au moins un de ces bords. De préférence, les moyens de déverrouillage sont situés au niveau de chaque bord longitudinal de l'organe d'agencement.

D'autre part, l'organe d'agencement peut également comprendre des moyens de déverrouillage permettant de retirer l'organe d'agencement de la structure de support par l'avant ou par l'arrière.

Selon une forme de réalisation pratique, les moyens de verrouillage peuvent être formés sur une bride souple déformable élastiquement à la main.

Selon un autre aspect de l'invention, on peut considérer que l'organe d'agencement comprend une zone arrière d'arrivée de câbles de connexion, une zone centrale d'épanouissement de ces câbles et une zone avant où sont définis lesdits logements avec leur organe de support et moyens de connexion associés.

Ainsi, l'organe d'agencement, qui peut se présenter sous la forme d'une cassette, peut comprendre deux, trois, quatre, cinq, six voire sept logements disposés les uns au-dessus des autres, avec avantageusement un pas constant de 44,45 mm. De cette manière, chaque prise est adjacente à l'autre de manière verticale. D'autre part, la cassette présente de préférence une épaisseur égale à la valeur standard d'une prise, soit 18,4 mm environ.

Avantageusement, l'organe d'agencement comprend en outre un système de mise à la terre reliant électriquement tous les moyens de connexion montés sur l'organe et adaptés à établir un contact électrique avec une masse générale commune à plusieurs organes. La reprise ou mise à la terre commune peut être formée par la structure de support qui est de préférence métallisée ou réalisée en métal.

La présente invention définit également un dispositif de montage de moyens de connexion tels que des prises courant faible ou optique comprenant au moins un organe d'agencement tel que défini ci-dessus ainsi qu'une structure de support, ladite structure comprenant des moyens de maintien pour maintenir de manière amovible le ou les organe(s) d'agencement dans la structure de support. La structure de support peut se présenter sous la forme d'un cadre ou d'une boîte ouvert sur l'avant et sur l'arrière. Avantageusement, les moyens de maintien comprenant des moyens de maintien inférieurs et des moyens de maintien supérieurs, ledit au moins un organe d'agencement comprenant des moyens de verrouillage correspondants aptes à coopérer avec ces moyens de maintien pour mettre en place et retirer l'organe d'agencement de la structure. Ainsi, chaque organe d'agencement est maintenu et fixé de manière amovible à l'intérieur de la structure au niveau de ces bords supérieur et inférieur. Avantageusement, les moyens de maintien peuvent comprendre des moyens de guidage dans lesquels ledit au moins un organe d'agencement est déplaçable jusqu'à ou depuis une position de verrouillage définie par les moyens de maintien et de verrouillage respectifs.

Selon une autre caractéristique, la structure comprend un côté frontal et un côté arrière, ledit au moins un organe d'agencement étant engageable ou extractible de la structure du côté frontal et du côté arrière.

Selon un autre aspect, la structure comprend un support inférieur sensiblement horizontal formant les moyens de maintien inférieurs et un support supérieur sensiblement horizontal formant les moyens de maintien supérieurs, les deux support étant reliés entre eux par deux éléments latéraux pourvus avantageusement de moyens d'assujettissement à une baie porteuse.

Enfin, la présente invention définit également une baie porteuse par exemple du type standard 19 pouces comprenant plusieurs structures de support telles que définies ci-dessus, chaque structure de support recevant plusieurs organes d'agencement tels que définis ci-dessus.

Grâce à l'organe d'agencement et sa structure de support associée selon l'invention, il est possible de constituer un panneau de répartiteur agencé par colonnes et non plus par rangées comme c'est le cas dans l'art antérieur. Les colonnes sont constituées chacune par un ou plusieurs organe(s) d'agencement disposé(s) verticalement les uns au-dessus des autres. Chaque organe d'agencement peut recevoir un nombre défini de prises, par exemple quatre. Toutefois, on peut également réaliser d'autres organes d'agencement pouvant recevoir uniquement deux ou au contraire huit prises verticalement. Il suffit alors de réaliser des structures de support adaptées en fonction du nombre de prises que peut recevoir les organes d'agencement destinés à être montés dans la structure de support.

L'avantage avec de tels organes d'agencement est qu'il est possible de les pré-monter ou pré-câbler, c'est-à-dire d'effectuer le montage des organes de support ainsi que des prises en atelier ou en usine. De même, il est également possible de réaliser le câblage des prises sur l'organe d'agencement. Ainsi, il est possible de pré-équiper intégralement l'organe d'agencement en atelier ou en usine de sorte que l'opérateur chargé de réaliser le répartiteur n'aura plus qu'à insérer les différents organes d'agencement déjà équipés dans les structures de support préalablement montées sur les rails de la baie porteuse. Il lui suffit ensuite de dérouler le câble relié à l'organe d'agencement considéré jusqu'au niveau de l'implantation des prises d'alimentation dans les pièces des locaux à équiper. Ce pré-montage ou pré-équipement de l'organe d'agencement n'était pas possible avec les dispositifs de montage de l'art antérieur du type platine ou bandeau qui s'étendent horizontalement.

L'invention sera maintenant plus amplement décrite en référence aux dessins joints donnant à titre d'exemples non limitatifs un mode de réalisation de l'invention.

Sur les figures :
- la figure 1 est une vue d'ensemble en perspective d'un dispositif de montage selon l'invention comprenant une structure de support dans laquelle sont montés plusieurs organes d'agencement selon l'invention,
- la figure 2 est une vue similaire à celle de la figure 1, mais vue de l'arrière,
- la figure 3 est une vue en plan d'un organe d'agencement selon l'invention,
- la figure 4 est une vue de l'arrière de l'organe d'agencement de la figure 3,
- la figure 5 est une vue en perspective de l'organe d'agencement des figures 3 et 4,
- la figure 6 est une autre vue en perspective de l'arrière de l'organe d'agencement de la figure 5,
- les figures 7 et 8 sont également des vues en perspective respectivement de devant et de derrière de l'organe d'agencement des figures précédentes, et
- la figure 9 est une vue agrandie en perspective partiellement découpée pour montrer l'interaction déverrouillage entre un organe d'agencement et une structure de support selon l'invention.

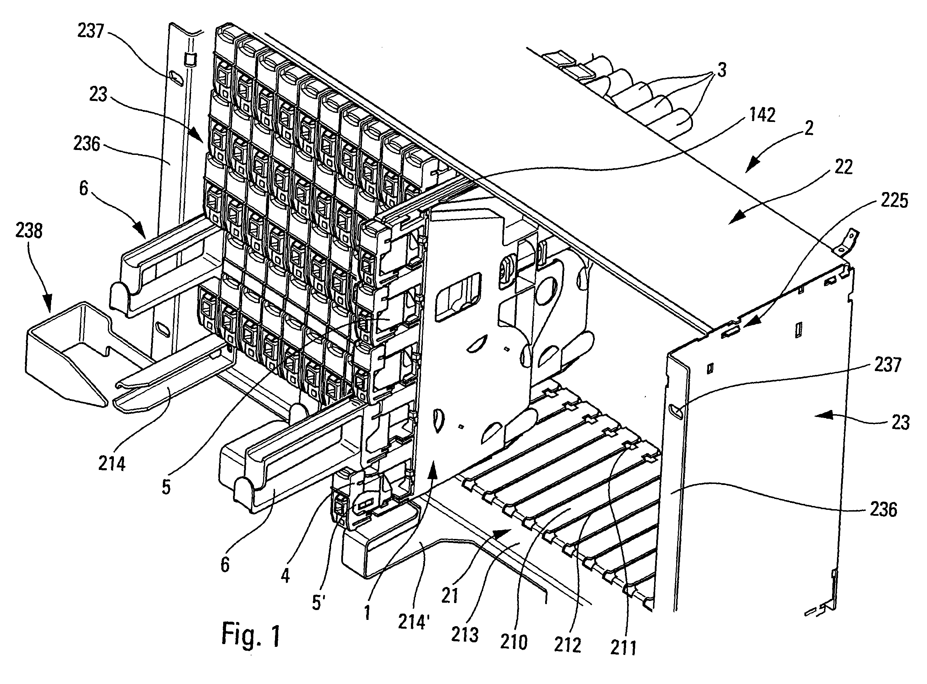

La présente invention telle qu'illustrée sur les figures 1 à 9 met en oeuvre plusieurs éléments constitutifs, à savoir un ou de préférence plusieurs organe(s) d'agencement désigné(s) par la référence numérique 1 ainsi qu'une ou plusieurs structure(s) de support désignée(s) par la référence numérique 2.

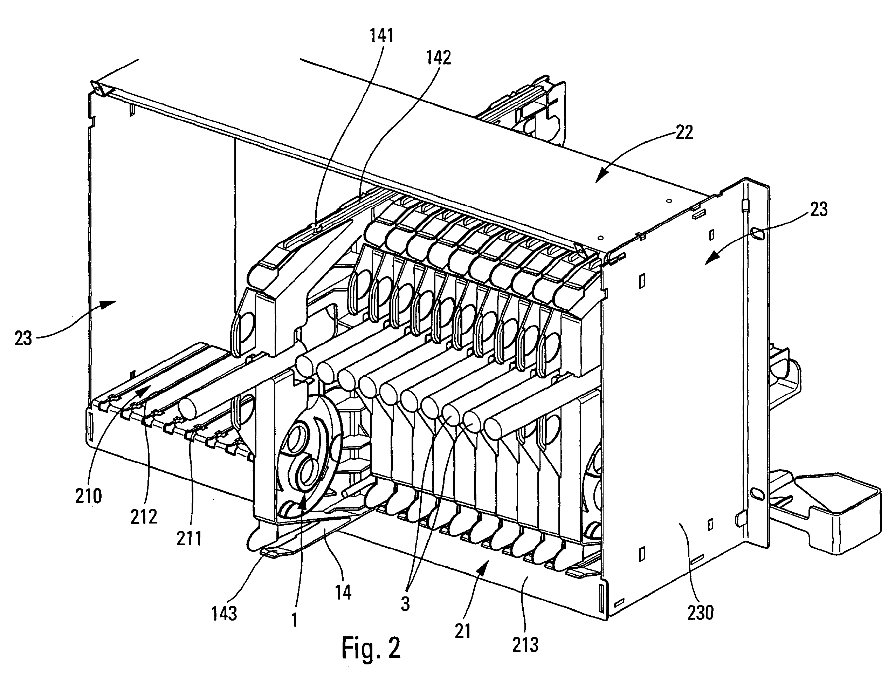

Sur les figures 1 et 2, on peut voir globalement que la structure de support 2 se présente sous la forme d'un cadre ou d'une boîte ouvert sur son côté avant et son côté arrière. La structure de support présente une forme géométrique globalement parallélépipédique. Quant aux organes d'agencement, il sont logés à l'intérieur de la structure porteuse et peuvent en être extraits ou mis en place depuis le côté avant ou le côté arrière comme on peut le voir très clairement sur la figure 2. Les organes d'agencement se présentent sous la forme de cassettes disposées verticalement à l'intérieur de la structure de support 2. Dans la suite de la description, les organes d'agencement seront désignés par le terme « cassettes ». Ces cassettes présentent une configuration générale allongée verticale. Leur épaisseur est relativement faible par rapport à leur hauteur et leur profondeur. Sur la figure 1, une cassette est partiellement engagée dans la structure de support 2 : on peut ainsi voir que la hauteur de la cassette correspond sensiblement à la hauteur de la structure de support 2, sa profondeur correspond sensiblement à la profondeur de la structure de support 2 alors que son épaisseur est très réduite, sensiblement de l'ordre de 18,4 mm. Chaque cassette est maintenue à l'intérieur de la structure de support au niveau de son bord supérieur et de son bord inférieur. Nous verrons ci-après de quelle manière les cassettes sont maintenues et verrouillées de manière amovible à l'intérieur de la structure de support.

Les cassettes peuvent être fabriquées en matière plastique ou en métal. La matière plastique est cependant préférée. Une réalisation monobloc est possible et préférée.

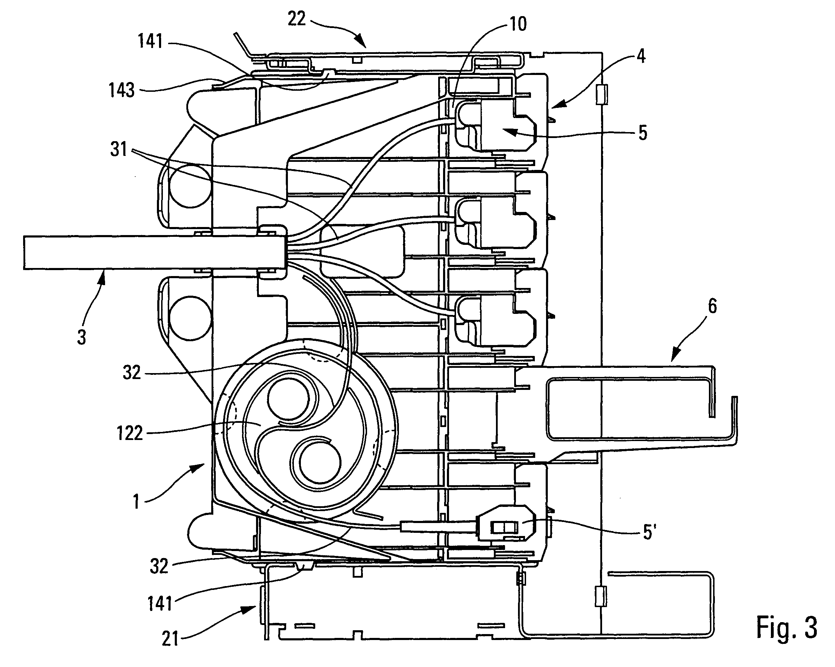

Nous nous référerons maintenant aux figures 3 à 8 pour décrire de manière détaillée la structure d'une cassette 1.

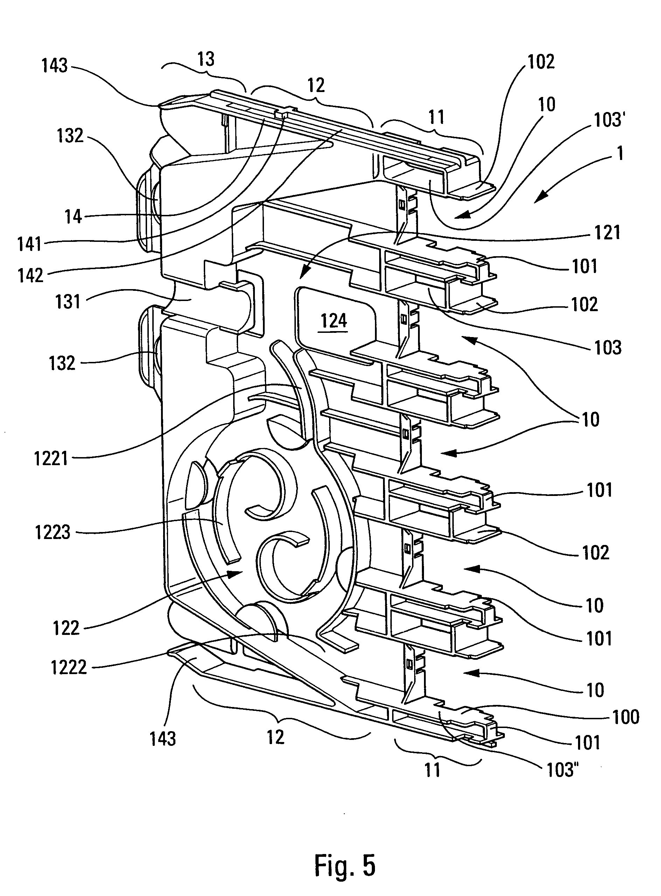

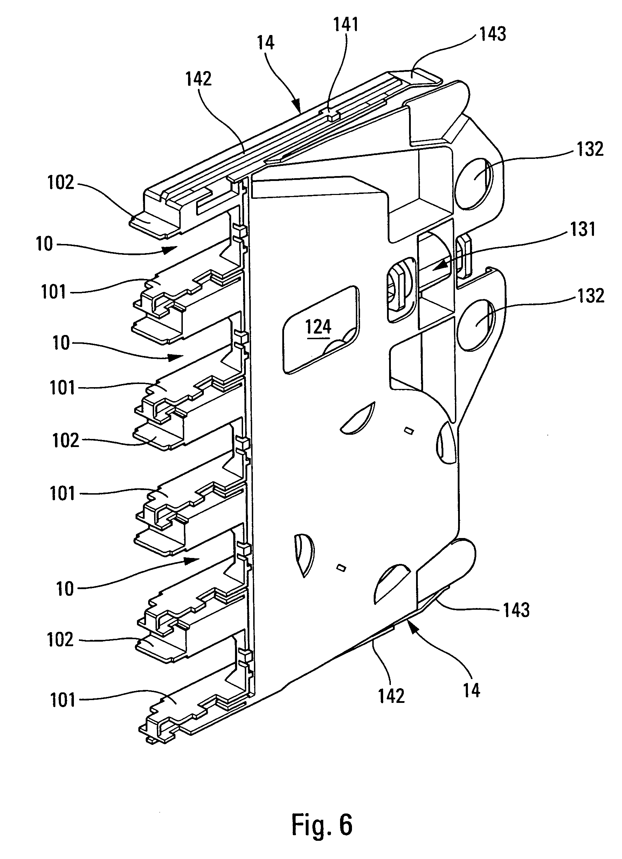

Les figures 5 et 6 représentent une cassette nue, c'est-à-dire dépourvue de tout accessoire (prises, support de prise, câbles, cordons). La cassette est ici réalisée de manière monobloc en matière plastique injectée moulée. La figure 5 est une vue en perspective d'un côté de la cassette alors que la figure 6 est une autre vue en perspective de l'autre côté de la cassette. On peut considérer que la face visible sur la figure 5 est la face avant alors que la face visible sur la figure 6 est la face arrière. La cassette 1 peut être fonctionnellement divisée en trois zones, à savoir une zone avant 11, une zone intermédiaire 12 et une zone arrière 13. Chaque zone 11, 12 et 13 s'étend verticalement sensiblement sur toute la hauteur de la cassette. La zone 11 définit la partie frontale de la cassette. La zone avant 11 définit ou forme plusieurs logements 10 qui sont disposés verticalement les uns au-dessus des autres. Les logements sont ouverts sur la face avant de la cassette. Ces logements 10 sont séparés par tronçons de poutrelle 103 qui s'étendent sensiblement horizontalement vers l'avant. Chaque poutrelle 103 définit le bord inférieur du logement supérieur et le bord supérieur du logement inférieur. Les poutrelles d'extrémités, à savoir la poutrelle d'extrémité supérieure 103 et la poutrelle d'extrémité inférieure 103', définissent respectivement uniquement le bord supérieur du logement inférieur et le bord inférieur du logement supérieur. D'autre part, chaque poutrelle 103 définit des moyens de fixation 101 ainsi qu'une bride de stabilisation 102. Les moyens de fixation définis par une poutrelle 103 sont associés au logement supérieur 10 alors que la bride de stabilisation 102 est associée au logement inférieur. Quant à la poutrelle supérieure 103', elle ne forme qu'une bride de stabilisation 102. La poutrelle inférieure 103' ne forme que des moyens de fixation 101 pour le logement supérieur. Ainsi, chaque logement 10 est défini entre deux poutrelles 103 et comprend des moyens de fixation 101 et une bride de stabilisation 102. Les moyens de fixation 101 sont situés au niveau du bord inférieur du logement alors que la bride de stabilisation 102 est située sur le bord supérieur du logement. On peut toutefois inverser la localisation des moyens de fixation et de la bride de stabilisation 102 sans sortir du cadre de l'invention. Ainsi, la zone avant frontale est essentiellement formée par une colonne de logements 10 comprenant chacun des moyens de fixation propres et une bride de stabilisation propre. Chaque logement 10 est largement ouvert vers l'avant mais également ouvert sur l'arrière pour communiquer avec la zone intermédiaire 12.

Cette zone intermédiaire 12 est une zone d'épanouissement pour des câbles de connexion tels que des câbles électriques ou optiques. La zone intermédiaire 12 peut par exemple comprendre une zone d'épanouissement de câbles électriques 121 et une zone d'épanouissement ou de lovage de fibres optiques 122. Sur la figure 5, la zone d'épanouissement des câbles électriques 121 est située au-dessus de la zone de lovage pour fibres optiques 122. Ainsi, les trois ou quatre logements supérieurs 10 peuvent être destinés à des prises électriques par exemple du type courant faible alors que le logement inférieur 10 peut être réservé à une prise du type optique. La zone de lovage 122 peut par exemple se présenter sous la forme d'une boîte sensiblement cylindrique à l'intérieur de laquelle la fibre optique peut être disposée pour conserver le rayon de courbure de la fibre sans faire de plis marqués. On peut même utiliser un couvercle pour fermer la boîte de lovage 122. On peut voir que la boîte de lovage 122 comprend une rampe d'accès 1121 et une rampe de sortie 1122 qui conduit vers le logement inférieur 10. On peut également remarquer que cette zone centrale ou intermédiaire 12 est formée avec une fenêtre 124 qui fait communiquer les deux faces latérales de la cassette. En effet, on peut clairement voir sur la figure 6 que cette fenêtre 124 débouche sur l'autre face de la cassette.

La zone arrière 13 est une zone d'arrivée des câbles, et comprend pour ce faire un conduit d'arrivée 131 à l'intérieur duquel un cordon de câbles peut être logé et même fixé, par exemple à l'aide d'un collier. Le cordon de câbles, à la sortie du conduit 131 à l'intérieur de la cassette peut ensuite être divisé en câbles d'alimentation électrique ou optique qui vont s'épanouir ou se lover dans la zone centrale 12. Cette zone arrière 13 comprend également des moyens de préhension 132 qui peuvent par exemple se présenter sous la forme de trous de préhension à travers lesquels on peut passer un doigt d'une main et ainsi saisir fermement la cassette pour la pousser ou la tirer. On peut aisément comprendre qu'une partie des câbles du cordon peut également être passée à travers la fenêtre 124.

La cassette définit également un bord supérieur et un bord inférieur. Chaque bord s'étend sur l'ensemble des zones 11, 12 et 13. Ces bords supérieur et inférieur s'étendent de manière sensiblement parallèle. Ils définissent la hauteur maximale de la cassette. Cette hauteur est directement dépendante du nombre de logements formés par la cassette. L'extrémité d'attaque du bord supérieur par exemple est formée par la face supérieure du bord de la poutrelle supérieur 103'. Le bord supérieur forme une nervure 142 sur au moins une partie de sa longueur. De préférence, la nervure s'étend pratiquement sur la totalité de la longueur du bord supérieur. Cette nervure 142 s'étend donc depuis l'extrémité de la poutrelle 103' et se prolonge vers l'arrière jusqu'au niveau de la zone arrière 13. La nervure 142 est formée par une languette élastiquement déformable à partir de la zone intermédiaire 12. Au niveau de la zone arrière 13, le bord supérieur est uniquement formé par cette languette élastiquement déformable 14. Cette languette élastiquement déformable 14 forme également un grain de verrouillage ou de blocage 141 qui est positionné sur la nervure 142. Cette bride élastiquement déformable 14 s'étend donc jusqu'au niveau de la zone arrière 13 pour former une languette d'actionnement au niveau de laquelle on peut appuyer à l'aide d'un doigt d'une main pour déformer la bride 14. La nervure 142 ne s'étend avantageusement pas jusqu'au niveau de cette languette d'actionnement 143. Nous verrons ci-après que cette languette d'actionnement 143 fait fonction de moyen de déverrouillage pour annuler ou éliminer la fonction de déverrouillage fournie par le grain de verrouillage 14.

Des moyens de verrouillage tels qu'un grain de verrouillage ainsi que des moyens de déverrouillage tels qu'une languette 143 sont prévus sur le bord supérieur de la cassette mais peuvent également être prévus sur le bord inférieur de la cassette. De préférence, la cassette est pourvue sur ces deux bords supérieur et inférieur de moyens de verrouillage et de déverrouillage.

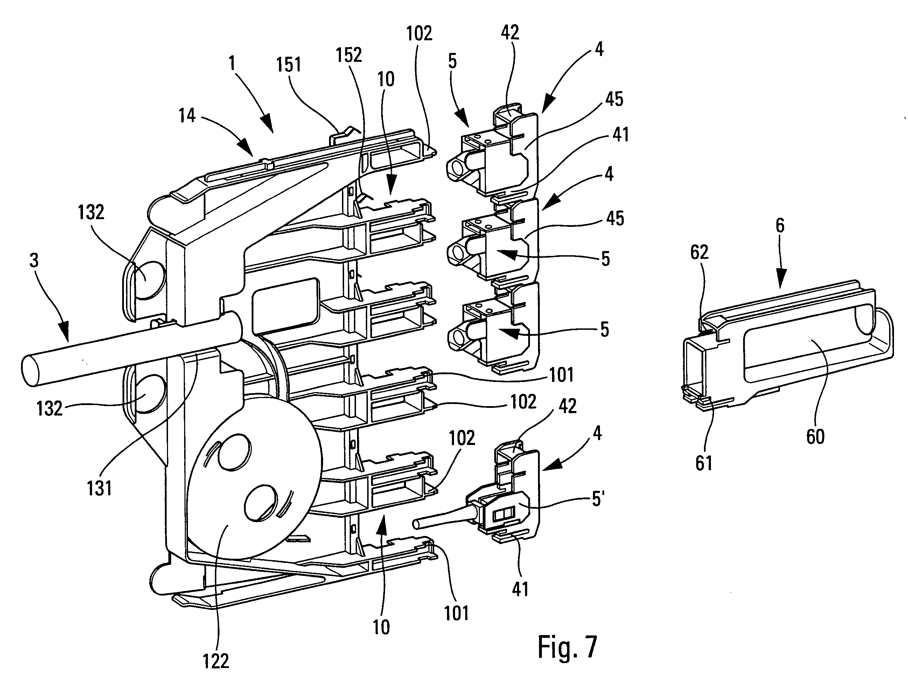

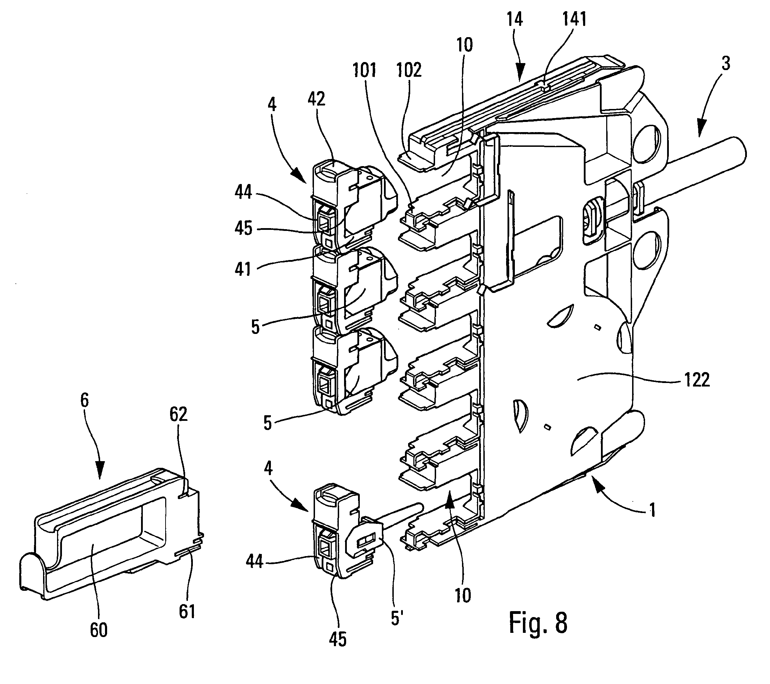

On se référera maintenant aux figures 7 et 8 qui illustrent la cassette des figures 5 et 6 avec des accessoires d'équipement. La cassette sert en effet selon l'invention de moyens d'agencement pour des moyens de connexion tels que des prises de préférence courant faible ou optique. Chaque logement 10 est adapté à recevoir une prise courant faible 5 ou optique 5' qui est insérée à l'intérieur du logement 10 depuis la face avant de la cassette. Pour maintenir ces prises 5, 5' à l'intérieur des logements 10, il est avantageusement prévu des organes de support 4 qui peuvent être standards, et sur lesquels sont montées les prises 5, 5', comme on peut le voir sur la figure 7. Ensuite, lorsque les prises 5 sont montées sur les supports 4, les supports 4 sont montés dans les logements 10 en les insérant depuis la face avant de la cassette. Pour ce faire, chaque organe de support 4 forme des moyens de fixation correspondants 41 destinés à coopérer avec les moyens de fixation 101 des logements 10. De même, chaque organe de support 4 forme une bride de blocage destinée à venir en prise avec la bride de stabilisation 102 du logement 10. Les prises sont ainsi fixées dans des logements respectifs par l'intermédiaire des supports. Une fixation directe des prises dans les logements est également possible. Avantageusement, les supports, respectivement les prises, sont reçues de manière amovible dans leurs logements respectifs. Il est aussi possible de retirer le support de son logement depuis la face avant de la cassette sans la démonter. Avantageusement, les moyens de fixation 41 et 101 réalisent une fixation par encliquetage réversible, de sorte qu'il est possible de retirer le support de son logement. Pour la réception de la prise 5 ou 5' dans l'organe de support 4, ce dernier forme un habitacle de réception 45 dans lequel la prise 5 peut être insérée et maintenue fixement, par exemple par encliquetage en force. Sur la face avant, comme on peut le voir sur la figure 8, l'organe de support 4 forme une fenêtre 44 à travers laquelle la prise 5 ou 5' est accessible, par exemple au moyen d'un connecteur approprié. Par exemple, les trois logements supérieurs 10 peuvent être équipés de supports 4 recevant des prises de courant faible 5, alors que seul le logement inférieur 10 reçoit un support 4 équipé d'une prise optique 5'. Le logement 10 situé juste au-dessus du logement recevant la prise optique 5' peut être équipé d'un accessoire quelconque comme par exemple un passe-câble 6 également formé avec des moyens de fixation associés 61 et une bride de blocage 62. Le passe-câble 6 peut former deux bras définissant entre eux un espace refermé à l'intérieur desquels on peut faire passer des câbles destinés à venir se connecter sur les prises à travers la fenêtre 44 des supports 4. Sur l'arrière de la cassette, on peut faire parvenir un cordon 3 regroupant plusieurs câbles, par exemple électriques et optiques.

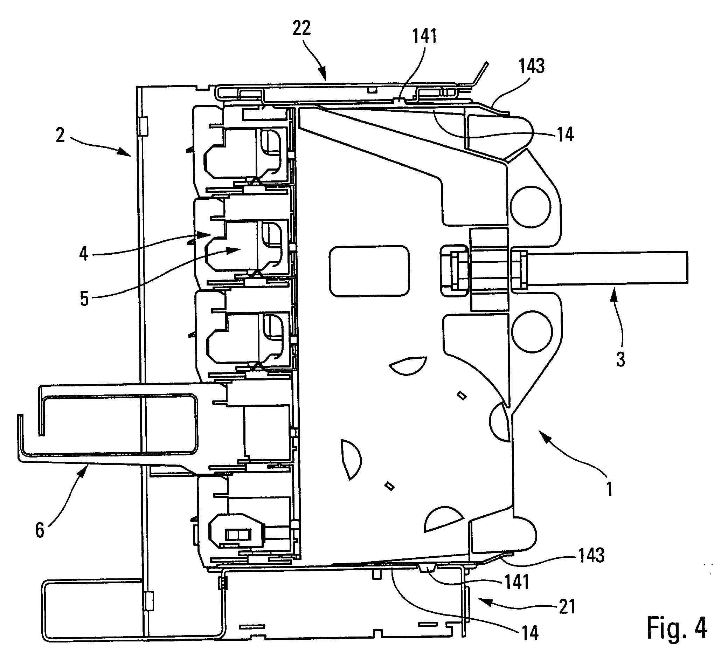

On se référera maintenant aux figures 3 et 4 qui représentent la cassette équipée de ses supports 4 recevant les prises 5 et 5', ainsi que du passe-câble 6. D'autre part, on peut voir de quelle manière les câbles 31 et 32 du cordon de câbles 3 s'épanouissent ou se lovent à l'intérieur de la cassette plus particulièrement au niveau de sa zone centrale ou intermédiaire 12. On peut notamment voir que les câbles électriques 31 vont venir se connecter sur les prises 5 reçues sur les organes de supports 4 fixés dans les logements respectifs 10. Quant à la fibre optique 32, elle se love à l'intérieur de la zone de lovage 122 pour ressortir et parvenir jusqu'au connecteur optique 5'.

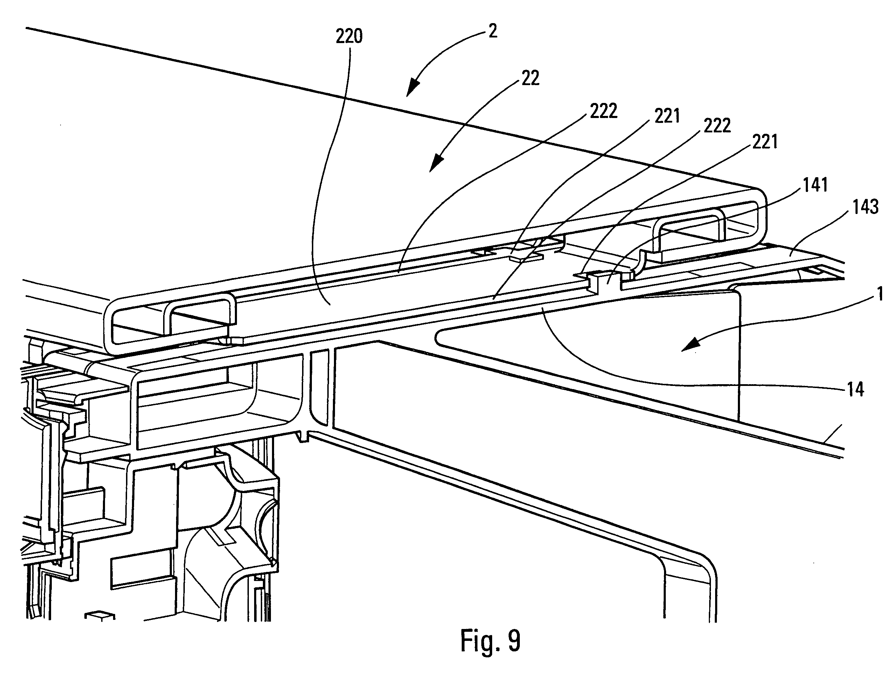

On se référera maintenant à nouveau aux figures 1 et 2 ainsi qu'à la figure 9 pour expliquer de quelle manière la cassette coopère avec la structure de support 2.

La structure de support 2 se présente sous la forme d'une boîte ou d'un casier avantageusement constitué d'une plaque inférieure 21 et d'une plaque supérieure 22 reliées entre elles par deux éléments d'entretoise 23. Avantageusement, les plaques 21 et 22 sont reliées aux éléments latéraux 23 par des systèmes d'emboîtement et de blocage uniquement, de sorte que des organes de fixation tels que des vis ou des rivets ne sont pas nécessaires. Ainsi, le montage d'une structure de support 2 peut être réalisé manuellement ou de manière automatisée sans l'aide d'outils spécifiques tels que des tournevis ou rifteuses. Les deux éléments latéraux 23 peuvent être strictement identiques ou au moins symétriques selon une symétrie miroir. Chaque élément latéral 23 forme un pan de base 230 percé de plusieurs lumières ou encoches servant à la fixation des plaques 21 et 22 ainsi qu'à la fixation d'accessoire tel qu'un passe-câble général 238. Les éléments latéraux 23 forment également un retour 236 qui est également percé de fenêtres 237 servant à la fixation de la structure de support 2 sur des rails verticaux formant une baie porteuse. Comme on peut le voir sur la figure 1, les deux retours 236 s'étendent dans un même plan de manière à pouvoir les appliquer sur les rails de la baie porteuse. Il est alors aisé aux moyens de vis ou de boulons de fixer la structure de support sur la baie porteuse. La plaque inférieure 21 et la plaque supérieure 22 peuvent être de structure totalement identique, mais de préférence, la plaque inférieure 21 se différencie de la plaque supérieure 22 par la présence d'un bandeau frontal 213 qui peut servir de base pour la fixation d'accessoires tels que des passe-câbles 214, comme on peut le voir sur la figure 1. D'autre part, le bandeau frontal 213 peut également être pourvu d'autres passe-câbles 214', comme on peut également le voir sur la figure 1. Autrement, les deux plaques 21 et 22 présentent une configuration commune qui consiste en une platine de maintien 210, 220 respectivement pour les plaques de support 21, 22. Chaque platine 210, 220 constitue un élément de support et de maintien pour les cassettes 1. Les deux platines 210, 220 se font face à l'intérieur de la structure de support 2. La platine 210 constitue des moyens de support et de maintien inférieurs alors que la platine 220 constitue des moyens de support et de maintien supérieurs. Chaque platine est formée avec des moyens de guidage en translation qui se présentent ici sous la forme de fentes alignées parallèlement 212 et 222. Ces fentes 212et 222 s'étendent sensiblement sur la totalité de la largeur de la platine de manière à déboucher de chaque côté de la platine. Il est ainsi possible d'engager un élément quelconque à l'intérieur d'une des fentes par une de ses extrémités et de faire ressortir cet élément par l'autre extrémité de la fente. Ainsi, chaque fente constitue un rail de guidage en translation. Chaque fente forme également une fenêtre de blocage 211 qui est avantageusement située à proximité de la face arrière de la structure de support 2, comme on peut le voir sur les figures 1 et 2. Les deux platines 210 et 220 peuvent être formées avec de telles fenêtres 211, 221 ou en variante, seulement une des platines peut présenter de telles fenêtres. Etant donné que les deux platines 210 et 220 se font face, une fente 212 de la platine inférieure 210 s'étend dans le même plan vertical qu'une fente 221 de la platine supérieure 220. Les fentes peuvent ainsi associées en paires situées dans des plans verticaux adjacents parallèlement.

Selon l'invention, chaque cassette 1 est maintenue à l'intérieur de la structure porteuse 2 en venant en prise avec la platine inférieure 210 et la platine supérieure 220. Comme nous l'avons vu ci-dessus, chaque cassette 1 comprend une ou deux nervure(s) 142 qui s'étend(ent) au niveau d'un ou des deux bord(s) supérieur et inférieur de la cassette. On a également vue que ces nervures 142 sont pourvues d'un grain de verrouillage 141. Selon l'invention, chaque cassette 1 peut être engagée dans la structure de support 2 de manière à insérer la ou les nervure(s) 142 dans une paire de fentes 212, 222 formées par les platines 210, 220. Dès que les nervures 142 sont partiellement engagées dans les fentes, la cassette est guidée en translation et peut ainsi être coulissée à l'intérieur de la structure de support 2 entre les deux platines 210, 220. La cassette 1 peut être ainsi déplacée jusqu'à ce que son grain 141 vienne s'encliqueter dans une fenêtre respective 211, 221. Ceci est possible étant donné que le grain 141 est disposé sur la bride élastiquement déformable 14. Ainsi, lors de l'insertion d'une cassette entre les deux platines, la ou les pattes 14 sont déformées élastiquement jusqu'à ce que leurs grains respectifs viennent se loger à l'intérieur des fenêtres 211, 221. On a alors atteint une position finale verrouillée dans laquelle la cassette est pratiquement entièrement inscrite à l'intérieur du volume constitué par la structure de support 2, comme on peut le voir sur les figures 1 et 2. En effet, en se référant à ces figures, on voit qu'une série de cassettes est déjà insérée à l'intérieur de la structure 2 de telle sorte que les faces avant de chaque cassette sont situées sensiblement dans un même plan. Ainsi les prises forment toutes ensemble un tableau régulier et uniforme formé de colonnes indépendantes constituées par chaque cassette. Pour extraire une ou plusieurs cassette(s) de la structure de support, il suffit alors d'agir sur les languettes d'actionnement ou de déverrouillage 143 formées aux extrémités des brides 14. De cette manière, les grains 141 sont désengagés des fenêtres respectives 211, 221, et la cassette peut à nouveau être déplacé de manière guidée en translation à l'intérieur des fentes 212, 222 des platines 210, 220. Etant donné que les fentes sont ouvertes à chacune de leurs extrémités, il est possible de déplacer la cassette vers l'arrière ou vers l'avant de la structure de support 2, comme représenté sur la figure 2. Ainsi, en fonction de la manipulation requise, l'opérateur peut au choix extraire une cassette identifiée soit par l'avant de la structure de support 2 soit par l'arrière de cette structure pour y intervenir.

En se référant à la figure 1, on peut aisément comprendre que la structure de support 2 peut être entièrement remplie de cassettes 1 disposées côte à côte verticalement avec un pas correspondant au pas des fentes 212, 222. On obtient finalement un tableau complet constitué de prises courant fort, de prises courant faible, et éventuellement une rangée libre qui est avantageusement pourvue d'un accessoire tel qu'un passe-câble 6 ou obturée à l'aide d'un cache. Etant donné que chaque cassette ne comprend qu'un nombre limité de logements qui peut être adapté en fonction du répartiteur que l'on veut constituer, la manipulation de chaque cassette est relativement simple. Et ceci d'autant plus qu'il est possible de les extraire soit par l'avant soit par l'arrière en les déverrouillant manuellement sans l'aide d'outils particuliers. De plus, leur mise en place est également entièrement manuelle et presque automatique puisqu'il n'est pas nécessaire d'intervenir pour permettre au grain de venir se loger dans les fenêtres des fentes.

De préférence, les différentes cassettes sont pré-montées en usine ou en atelier, c'est-à-dire que les supports de connecteurs ainsi que les connecteurs sont pré-installés dans les logements et même pré-cablés avec une longueur de câbles suffisante pour pouvoir ensuite étendre le câble jusqu'au poste de travail à installer. De cette manière, l'opérateur chargé du montage du répartiteur n'a plus qu'à mettre les cassettes en place dans la structure de support 2 qui est très facile à monter puisqu'elle ne nécessite pas l'utilisation d'outils spécifiques. Bien entendu, il n'est pas nécessaire de câbler tous les connecteurs, mais bien au contraire il est possible de laisser certains connecteurs non câblés, comme par exemple les connecteurs optiques. Dans ce cas, une longueur de fibre optique peut être laissée en attente à l'intérieur de la zone de lovage 122 de la cassette. Ce n'est qu'au moment où l'utilisateur aura besoin de cette connexion optique que l'opérateur viendra sur site pour effectuer le câblage optique. Pour ce faire, il n'aura qu'à extraire la cassette concernée qui sera très facilement identifiable grâce à des codes de couleur et connecter la fibre optique sur le connecteur optique spécifique. Il ne restera plus qu'à réintroduire la cassette à l'intérieur de la structure de support 2.

En général, la reprise de terre sur les connecteurs de l'art antérieur se fait au moyen d'un bus rectiligne horizontal aménagé avec des éléments souples qui entrent en contact avec l'enveloppe du connecteur. Ce bus possède en outre des éléments de connexion type cosse pour relier au moyen de straps souples le bandeau en question aux bandeaux supérieur et inférieur, puis à la ligne générale.

Dans la présente invention, la cassette verticale est équipée d'épingles de reprise de terre individuelles 152 reliant électriquement les connecteurs, comme on peut le voir sur la figure 7. Chaque épingle est en contact dans sa partie basse avec l'enveloppe métallique ou métallisée du connecteur (prise) et dans sa partie supérieure avec l'épingle du connecteur située juste au-dessus, et ainsi de suite en fonction du nombre de connecteurs jusqu'à une épingle de reprise générale 151 qui se situe en position supérieure de la cassette et qui vient toucher au moyen d'un élément souple le support supérieur 22 du cadre 2 qui est conducteur (par exemple métallique ou métallisé) et qui relie les 24 cassettes à la terre générale au moyen d'une cosse.

L'esprit de la présente invention réside dans la configuration verticale tout à fait originale qui permet de se départir de la dimension standard 19 pouces de la baie porteuse. Toute l'organisation ou l'agencement des connecteurs s'effectue alors verticalement et non plus horizontalement comme c'était le cas avec les platines ou les bandeaux de l'art antérieur. De plus, un montage en atelier est possible, ce qui réduit considérablement les coûts d'installation.

Chaque prise est reçue individuellement dans un logement respectif qui est pourvu de moyens de fixation propres, du type encliquetage amovible ; les prises sont insérées dans leurs logements respectifs depuis la face avant de la cassette sans avoir à la démonter. Ainsi, il est possible de reconfigurer la disposition des prises sur la ou les cassette(s) sans avoir à retirer la cassette de sa structure de support et sans démontrer la cassette, et cela à partir de la face avant visible de la cassette. Il n'est pas nécessaire d'utiliser d'outils quelconques pour mettre en place et retirer les prises de leurs logements associés.

## Revendications

1. Organe d'agencement (1) de moyens de connexion (5, 5'), tels que des prises courant faible (5) ou optique (5'), ledit organe comprenant plusieurs logements d'accueil (10) au niveau desquels des moyens de connexion respectifs (5, 5') sont reçus, **caractérisé en ce que** lesdits logements (10) sont disposés verticalement de sorte que les moyens de connexion (5, 5') sont disposés les uns au-dessus des autres.

2. Organe d'agencement selon la revendication 1, dans lequel chaque logement comprend des moyens de fixation destinés à coopérer directement ou indirectement avec des moyens de connexion respectifs pour une fixation amovible des moyens de connexion dans le logement.

3. Organe d'agencement selon la revendication 1 ou 2, comprenant une face avant, les logements étant ouverts sur la face avant, les moyens de connexion étant insérables dans leurs logements respectifs depuis la face avant.

4. Organe d'agencement selon l'une quelconque des revendications précédentes, dans lequel chaque logement (10) est pourvu de moyens de fixation (101) destinés à coopérer avec des organes de support (4) sur lesquels les moyens de connexion (5, 5') sont montés.

5. Organe d'agencement selon l'une quelconque des revendications précédentes, dans lequel les moyens de fixation (101) sont situés au niveau d'un bord inférieur (100) de chaque logement (10).

6. Organe d'agencement selon l'une quelconque des revendications précédentes, présentant une configuration allongée verticale définissant un bord inférieur longitudinal et un bord supérieur longitudinal, lesdits moyens de verrouillage (141) étant situés au niveau d'au moins un de ces bords.

7. Organe d'agencement selon la revendication 4 ou 5, comprenant des moyens de déverrouillage (143) permettant de retirer l'organe (1) de la structure (2), les moyens de verrouillage (141) étant formés sur une bride souple (14) déformable élastiquement à la main.

8. Organe d'agencement selon l'une quelconque des revendications précédentes, comprenant une zone arrière (13) de câbles de connexion (3), une zone centrale d'épanouissement (12) des câbles (31, 32) et une zone avant (11) où sont définis lesdits logements (10).

9. Organe d'agencement selon l'une quelconque des revendications précédentes, comprenant en outre un système de mise à la terre (151, 152) reliant électriquement tous les moyens de connexion montés sur l'organe et adaptés à établir un contact électrique avec une masse générale commune à plusieurs organes.

10. Dispositif de montage de moyens de connexion (5, 5') comprenant au moins un organe d'agencement (1) selon l'une quelconque des revendications précédentes et une structure de support (2), ladite structure (2) comprenant des moyens de maintien (210, 220) pour maintenir de manière amovible ledit au moins un organe (1) dans la structure (2).

11. Dispositif de montage selon la revendication 10, dans lequel les moyens de maintien comprennent des moyens de maintien inférieurs (210) et des moyens de maintien supérieurs (220), ledit au moins un organe d'agencement (1) comprenant des moyens de verrouillage correspondants (141) aptes à coopérer avec ces moyens de maintien pour mettre en place et retirer l'organe d'agencement de la structure.

12. Dispositif de montage selon la revendication 10 ou 11, dans lequel les moyens de maintien comprennent des moyens de guidage (212) dans lesquels ledit au moins un organe d'agencement est déplaçable jusqu'à ou depuis une position de verrouillage définie par les moyens de maintien (210, 220) et de verrouillage respectifs (141).

13. Dispositif de montage selon l'une quelconque des revendications 10 à 12, dans lequel la structure (2) comprend un côté frontal et un côté arrière, ledit au moins un organe d'agencement (1) étant engageable ou extractible de la structure du côté frontal et du côté arrière.

14. Dispositif de montage selon l'une quelconque des revendications 11 à 13, dans lequel la structure (2) comprend un support inférieur sensiblement horizontal (210) formant les moyens de maintien inférieurs et un support supérieur sensiblement horizontal (220) formant les moyens de maintien supérieurs, les deux support étant reliés entre eux par deux éléments latéraux (23) pourvus avantageusement de moyens d'assujettissement (237) à une baie porteuse.

15. Baie porteuse comprenant au moins un dispositif de montage selon l'une quelconque des revendications 10 à 14, chaque structure (2) du dispositif recevant plusieurs organes d'agencement (1) selon l'une quelconque des revendications 1 à 9.
